# FASCICULE DE BREVET EUROPEEN

(11) **EP 2 214 960 B1**
(45) Date de publication et mention de la délivrance du brevet: **01.02.2012**
(21) Numéro de dépôt: 08872659.1
(22) Date de dépôt: 03.12.2008
(51) Int. Cl.: B64C 27/467, B64C 3/52

(54) **ELEMENT AERODYNAMIQUE ALLONGE DEFORMABLE EN TORSION**
VERLÄNGERTES UND TORSIONSVERFORMBARES AERODYNAMISCHES ELEMENT
ELONGATED, TORSION-DEFORMABLE AERODYNAMIC ELEMENT

(30) Priorité: 05.12.2007 FR 0708491
(43) Date de publication de la demande: 11.08.2010
(73) Titulaire: ONERA (Office National d'Etudes et de Recherches Aérospatiales), 92322 Châtillon Cedex (FR)
(72) Inventeur: MERCIER DES ROCHETTES, Hugges, F-59910 Bondues (FR); JOLY, Didier, F-59184 Sainghin En Weppes (FR); BUCHANIEK, Léon, F-59890 Quesnoy-Sur-Deule (FR)
(74) Mandataire: Gevers France
(86) Numéro de dépôt international: PCT/FR2008/001681
(87) Numéro de publication internationale: WO 2009/103865

(56) Documents cités:
- EP-A- 1 788 646
- WO-A-2004/067380
- US-A- 4 655 685
- US-A- 5 137 228

## Description

La présente invention concerne un élément aérodynamique allongé, tel qu'une aile d'aéronef ou une pale de voilure tournante, apte à être déformé en torsion de façon aussi bien statique que dynamique.

Par le document américain US-5 137 228, on connaît déjà une pale de voilure tournante apte à être déformée en torsion autour d'un axe dirigé au moins approximativement selon l'envergure de ladite pale et comportant, reliées l'une à l'autre, une partie longitudinale avant comprenant le bord d'attaque et une partie longitudinale arrière comprenant le bord de fuite. Dans cette pale connue, lesdites parties longitudinales sont reliées par l'intermédiaire d'un longeron et elles sont séparées l'une de l'autre par deux fentes longitudinales, respectivement pratiquées dans l'extrados et dans l'intrados de ladite pale. La torsion de celle-ci est commandée par des moyens d'actionnement localisés en pied de pale et portés par le mât de la voilure tournante. Lorsque lesdits moyens d'actionnement commandent la torsion de la pale, il en résulte un coulissement relatif desdites parties longitudinales le long desdites fentes.

Ce document américain antérieur recherche volontairement une rigidité en torsion négligeable pour ladite pale, ce qui est obtenu du fait que la section de celle-ci est doublement ouverte par lesdites fentes longitudinales d'extrados et d'intrados. Il en résulte que le premier mode de torsion de ladite pale est très bas, ce qui rend vraisemblablement difficile la commande monocyclique du pas de la pale en vol d'avancement. Une telle pale ne peut donc fonctionner qu'en vrillage adaptatif (vrillage quasi statique) et non pas en vrillage actif (dynamique).

De plus, du fait que les moyens d'actionnement sont concentrés en pied de pale, la force de mise en torsion est localisée à cet endroit de sorte que l'angle de torsion engendré par cette force est monotone (croissant ou décroissant) le long de ladite pale.

La présente invention a pour objet de remédier à ces inconvénients, en prévoyant un élément aérodynamique allongé suffisamment rigide en torsion pour pouvoir être commandé non seulement en vrillage statique, mais encore en vrillage actif et en permettant la commande locale de l'angle de torsion de la pale, le long de celle-ci.

A cette fin, selon l'invention, l'élément aérodynamique allongé, tel qu'une aile d'aéronef ou une pale de voilure tournante, pourvu d'une surface aérodynamique supérieure et d'une surface aérodynamique inférieure délimitant entre elles un bord d'attaque et un bord de fuite, ledit élément aérodynamique étant apte à être déformé en torsion autour d'un axe dirigé au moins approximativement selon l'envergure dudit élément aérodynamique et comportant, reliées l'une à l'autre, une partie longitudinale avant comprenant ledit bord d'attaque et une partie longitudinale arrière comprenant ledit bord de fuite, une torsion dudit élément aérodynamique allant de pair avec un coulissement relatif desdites parties longitudinales au moins sensiblement parallèlement à ladite envergure, est remarquable en ce que :
- l'une desdites surfaces aérodynamiques est continue et assure la liaison entre lesdites parties longitudinales avant et arrière ;
- l'autre desdites surfaces aérodynamiques est partagée, du côté dudit bord d'attaque, par une fente longitudinale dirigée au moins approximativement selon ladite envergure et séparant lesdites parties longitudinales avant et arrière l'une de l'autre, l'un des bords de ladite fente appartenant à l'une desdites parties longitudinales tandis que l'autre desdits bords appartient à l'autre partie longitudinale ; et
- à l'intérieur dudit élément aérodynamique, sont prévus des moyens d'actionnement aptes à provoquer un coulissement relatif entre lesdits bords de la fente.

Ainsi, dans l'élément aérodynamique de l'invention, du fait que les deux parties longitudinales sont reliées l'une à l'autre par l'une de ses surfaces aérodynamiques (intrados ou extrados) et que les bords de ladite fente longitudinale sont reliés par lesdits moyens d'actionnement, la rigidité en torsion dudit élément peut être ajustée à une valeur suffisante pour permettre un vrillage dynamique. De plus, lesdits moyens d'actionnement faisant maintenant partie intégrante dudit élément aérodynamique au lieu d'être localisés à l'extérieur de celui-ci, il est possible de les répartir à l'intérieur dudit élément aérodynamique, le long de l'envergure de celui-ci, pour obtenir toute distribution désirée d'angle de torsion en envergure.

On remarquera de plus que, dans la présente invention, le coulissement relatif desdites parties longitudinales constitue la cause dudit vrillage dudit élément aérodynamique, alors que, dans la pale de UNS-5 137 228, ce coulissement en est la conséquence.

Bien que ladite surface aérodynamique continue puisse être l'intrados dudit élément aérodynamique, il est avantageux que l'extrados de ce dernier soit continu et que ladite fente longitudinale se trouve dans ledit intrados. De plus, il est préférable que ladite fente longitudinale soit obturée par une bande d'une matière à faible module d'élasticité, par exemple un élastomère. Ainsi, ladite bande isole l'intérieur dudit élément aérodynamique tout en permettant, en se déformant élastiquement en cisaillement, le coulissement relatif des bords de ladite fente longitudinale.

Lesdits moyens d'actionnement internes de l'élément aérodynamique conforme à la présente invention peuvent être de toute nature désirée (électrique, mécanique, hydraulique...) et ils peuvent être soit uniformément répartis, soit distribués par unités, le long de l'envergure dudit élément aérodynamique.

Dans un mode de réalisation avantageux, lesdits moyens d'actionnement sont de type piézoélectrique et, de préférence, conformes au dispositif actionneur plan à structure sandwich décrit dans le document européen EP-1 788 646. Ils se présentent alors sous une forme plate multicouche apte à se déformer en cisaillement plan. Ils peuvent alors être disposés au moins en partie dans le plan de corde dudit élément aérodynamique.

On remarquera que ce document européen décrit également l'application d'un tel dispositif actionneur plat multicouche au vrillage d'un élément aérodynamique. Toutefois, dans ce cas, ledit dispositif actionneur est disposé au voisinage du bord de fuite ouvert dudit élément aérodynamique, entre les peaux d'extrados et d'intrados dudit bord de fuite. Il résulte quelques inconvénients de cette disposition.

En effet, on sait que, dans le cas où ledit élément aérodynamique est une pale de voilure tournante, il est important que, dans la section courante du profil, le centrage massique, l'axe neutre de la rigidité de battement et traînée (lieu des contraintes normales nulles) et l'axe élastique de torsion soient centrés à 25 % de la corde du profil à partir du bord d'attaque. Ce centrage à 25 % correspond au foyer aérodynamique du profil sur lequel est positionné l'axe de pas collectif et cyclique de la pale. Ce sont ces centrages et celui du centre élastique de torsion qui permettent d'éviter les couplages entre modes de battement et de torsion. En effet, lors de l'excitation dynamique du dispositif actionneur, la pale doit être sollicitée en torsion de façon aussi pure que possible pour minimiser le battement induit.

Ces centrages (massique, neutre et élastique) sont, dans le cas de l'application de EP-1 788 646, difficiles à réaliser compte tenu de la position en corde très arrière du dispositif actionneur et de la coupure au bord de fuite suivant l'envergure.

Par ailleurs, les deux bords ouverts du bord de fuite doivent être raidis pour transmettre le cisaillement à l'ensemble de la structure de l'élément aérodynamique et éviter une déformation en cisaillement uniquement locale. De plus, ces bords ouverts ont tendance à s'écarter l'un de l'autre sous certains effets aérodynamiques.

Grâce à la présente invention, on remédie également aux inconvénients de la technique antérieure représentée par le document EP-1 788 646.

En effet, selon l'invention, le bord de fuite est fermé et l'on peut placer lesdits moyens d'actionnement internes, quelle que soit leur nature (piézoélectrique, électrique, hydraulique, mécanique, ...) pour que l'axe de torsion soit disposé dans le plan de corde dudit élément aérodynamique et pour que, dans ce plan, la distance dudit axe au bord d'attaque soit au moins approximativement égale au quart de la corde du profil dudit élément aérodynamique.

Comme mentionné ci-dessus, les moyens d'actionnement internes peuvent présenter une autre structure que piézoélectrique, notamment lorsqu'une puissance importante est nécessaire.

Par exemple, lesdits moyens d'actionnement internes peuvent comprendre une pluralité d'unités hydrauliques, réparties le long dudit élément aérodynamique allongé. Chaque unité hydraulique peut comprendre deux vérins antagonistes, solidaires de l'une desdites parties longitudinales dudit élément aérodynamique et coopérant pour déplacer un coulisseau, solidaire de l'autre partie longitudinale, parallèlement à l'envergure dudit élément aérodynamique. Là encore, lesdites unités hydrauliques peuvent être disposées de façon que l'axe de torsion se trouve dans le plan de corde à 25% de la corde. Les différentes unités hydrauliques peuvent être alimentées en parallèle en fluide hydraulique et elles peuvent engendrer des angles de torsion locaux différents en fonction de leur position en envergure.

Dans encore une autre variante de réalisation, lesdits moyens d'actionnement internes peuvent comprendre une pluralité d'unités mécaniques, également réparties le long dudit élément aérodynamique allongé. Chaque unité mécanique peut comporter un excentrique monté rotatif par rapport à l'une des parties longitudinales dudit élément aérodynamique et coopérant avec l'autre desdites parties longitudinales pour engendrer le coulissement relatif de ces dernières. Comme précédemment, lesdites unités mécaniques peuvent être disposées de façon que l'axe de torsion se trouve dans le plan de corde à 25% de la corde. Lesdits excentriques peuvent être commandés en commun par une tringle guidée en coulissement dans ladite partie longitudinale sur laquelle sont montés rotatifs lesdits excentriques. Par ajustement individuel desdits excentriques, lesdites unités mécaniques peuvent également engendrer des angles de torsion locaux différents en fonction de leur position en envergure.

Les figures des dessins annexés feront bien comprendre comment l'invention peut être réalisée. Sur ces figures, des références identiques désignent des éléments semblables.
La figure 1 est la coupe schématique, transversalement à son envergure, d'un élément aérodynamique allongé à moyens d'actionnement piézoélectriques, conforme à la présente invention.
La figure 2 est une vue en perspective du dessus et de l'avant, schématique et partielle, à plus grande échelle et avec coupe, de l'élément aérodynamique de la figure 1.
La figure 3 illustre, en vue semblable à la figure 2, l'action des moyens d'actionnement internes piézoélectriques dudit élément aérodynamique.
La figure 4 illustre, en coupe schématique partielle, une variante de réalisation des moyens d'actionnement piézoélectriques de l'élément aérodynamique allongé des figures 1 à 3.
La figure 5 illustre schématiquement l'action des moyens d'actionnement de l'élément aérodynamique allongé de la figure 4.
La figure 6 montre, en coupe, un élément aérodynamique allongé conforme à la présente invention et pourvu de moyens d'actionnement hydrauliques.
La figure 7 est une vue en perspective schématique des moyens d'actionnement hydrauliques de l'élément aérodynamique allongé de la figure 6.
La figure 8 est une vue schématique, en perspective éclatée, d'un mode de réalisation mécanique des moyens d'actionnement pour l'élément aérodynamique allongé de l'invention.
La figure 9 illustre schématiquement le fonctionnement des moyens d'actionnement mécaniques de la figure 8.

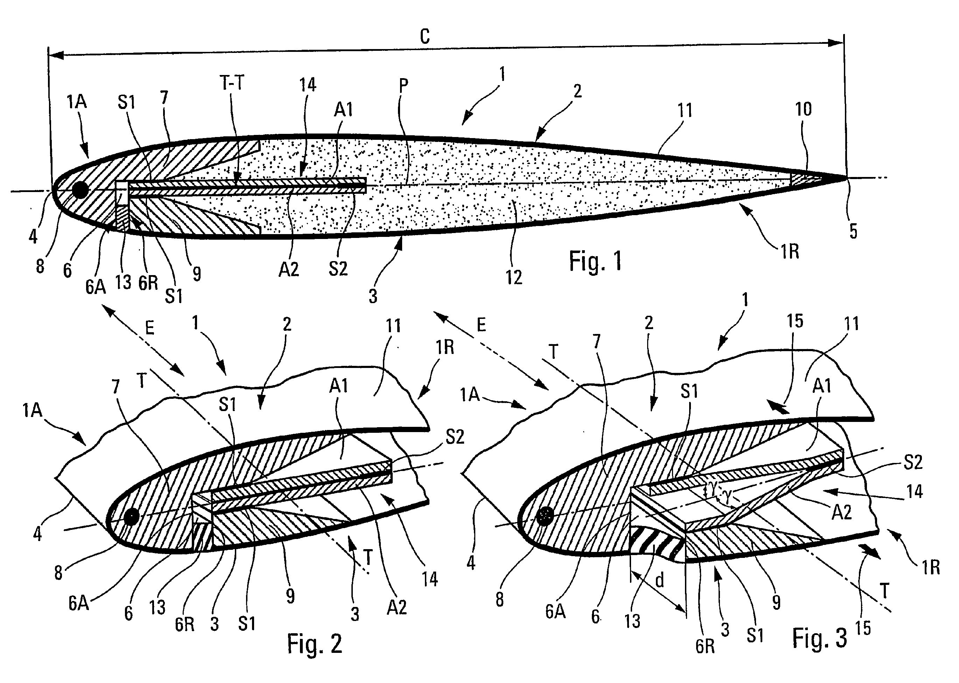

L'élément aérodynamique allongé 1, représenté sur les figures 1 à 3 (la figure 1 en étant une coupe transversale à son envergure E), est par exemple une aile d'aéronef ou une pale de voilure tournante. Il comporte un extrados 2 et un intrados 3 formant, à l'avant, un bord d'attaque 4 et, à l'arrière, un bord de fuite 5.

Au voisinage du bord d'attaque 4, l'intrados 3 est coupé par une fente longitudinale 6 partageant longitudinalement ledit élément aérodynamique 1 (selon l'envergure E) en une partie longitudinale avant 1 A comprenant ledit bord d'attaque 4 et en une partie longitudinale arrière 1 R comprenant ledit bord de fuite 5. En revanche, lesdites parties longitudinales avant 1 A et arrière 1 R sont solidaires l'une de l'autre par l'extrados 2 qui est continu.

Dans l'exemple représenté sur les figures 1 à 3, ledit élément aérodynamique 1 comporte :
- un longeron de bord d'attaque 7, formant ledit bord d'attaque 4 et les parties de l'extrados 2 et de l'intrados 3 voisines de ce dernier ; ce longeron 7 peut être réalisé en une matière composite fibres-résine (par exemple verre-époxy ou carbone-époxy) et éventuellement incorporer une masse de ballastage 8, allongée selon ledit bord d'attaque 4 ;
- un longeron d'intrados 9, séparé dudit longeron de bord d'attaque 7 par ladite fente longitudinale d'intrados 6, le bord avant 6A de celle-ci étant formé par une face transversale longitudinale du longeron de bord d'attaque 7 alors que le bord arrière 6R de ladite fente longitudinale 6 est formé par une face transversale longitudinale dudit longeron d'intrados 9 ; celui-ci peut également être réalisé en une matière composite fibres - résine ;
- un longeron d'arêtier 10 formant le bord de fuite 5, et par exemple réalisé en matière composite fibres - résine ;
- une coque 11 formant l'extrados 2 et l'intrados 3 (interrompu par la fente 6) et enveloppant les longerons 7, 9 et 10, en en étant solidaire ;
- une mousse expansée 12, par exemple en polyuréthane, remplissant ladite coque 11 (on notera que, pour des raisons de clarté du dessin, le remplissage de mousse 12 n'est pas représenté sur les figures 2 et 3) ; et
- une bande 13 d'une matière élastomère à faible module d'élasticité, obturant la fente 6 et étant solidaire (de préférence par collage) des bords 6A et 6R de cette dernière.

Par ailleurs, à l'intérieur de la coque 11 est disposé, de préférence au moins en partie dans le plan de corde P de l'élément 1, un dispositif actionneur plan piézoélectrique 14 semblable à celui décrit dans le document EP-1 788 646, auquel il est ici expressément renvoyé.

Ce dispositif actionneur connu 14 comporte deux actionneurs plans à structure sandwich A1 et A2 superposés, solidarisés l'un de l'autre, par collage par exemple, le long d'une zone marginale allongée S2 et comportant chacun une zone marginale allongée S1, opposée et parallèle à ladite zone S2. Comme il a été expliqué dans le document EP-1 788 646, lorsque les actionneurs plans A1 et A2 sont activés, ils engendrent un cisaillement plan d'amplitude angulaire 2γ, entraînant un coulissement relatif d'amplitude d entre les deux zones marginales allongées S1 (voir la figure 3).

Dans l'élément aérodynamique 1, le dispositif actionneur 14 est monté de façon que les zones marginales allongées S1 et S2 soient dirigées selon l'envergure E, la zone S1 de l'actionneur A1 étant solidaire du longeron de bord d'attaque 7 alors que la zone S1 de l'actionneur A2 est solidaire du longeron d'intrados 9. A cet effet, lesdits longerons 7 et 9 peuvent ménager entre eux un espace longitudinal dans lequel sont introduites lesdites zones S1 des actionneurs A1 et A2.

Ainsi, comme le montre la figure 3, lorsque lesdits actionneurs A1 et A2 sont activés, le coulissement d est dirigé selon l'envergure E et est transmis aux longerons 7 et 9 qui se déplacent l'un par rapport à l'autre. Il en résulte donc un déplacement relatif entre la partie avant 1 A et la partie arrière 1 R (schématisé par les flèches 15 sur la figure 3) et un gauchissement de la coque 11 se traduisant par une déformation en torsion de l'élément 1 autour d'un axe de torsion T-T disposé dans le plan de corde P et dirigé selon l'envergure E. Bien entendu, la bande 13 subit également une déformation par cisaillement (voir figure 3).

On remarquera que, du point de vue mécanique, le dispositif actionneur 14 "ferme" la fente 6, de sorte que la rigidité en cisaillement dudit dispositif actionneur conditionne en grande partie la rigidité en torsion de l'élément aérodynamique 1.

Pour obtenir la torsion désirée, on peut utiliser soit un unique dispositif actionneur 14 s'étendant sur la totalité de l'envergure E de l'élément aérodynamique 1, soit une pluralité de dispositifs actionneurs 14 individuels répartis le long de ladite envergure E.

Dans le cas où l'élément aérodynamique 1 est une pale de voilure tournante, il est avantageux, pour les motifs indiqués ci-dessus que, dans le plan de corde P, la distance séparant l'axe de torsion T-T du bord d'attaque 4 soit au moins approximativement égale à 25% de la corde C de ladite pale.

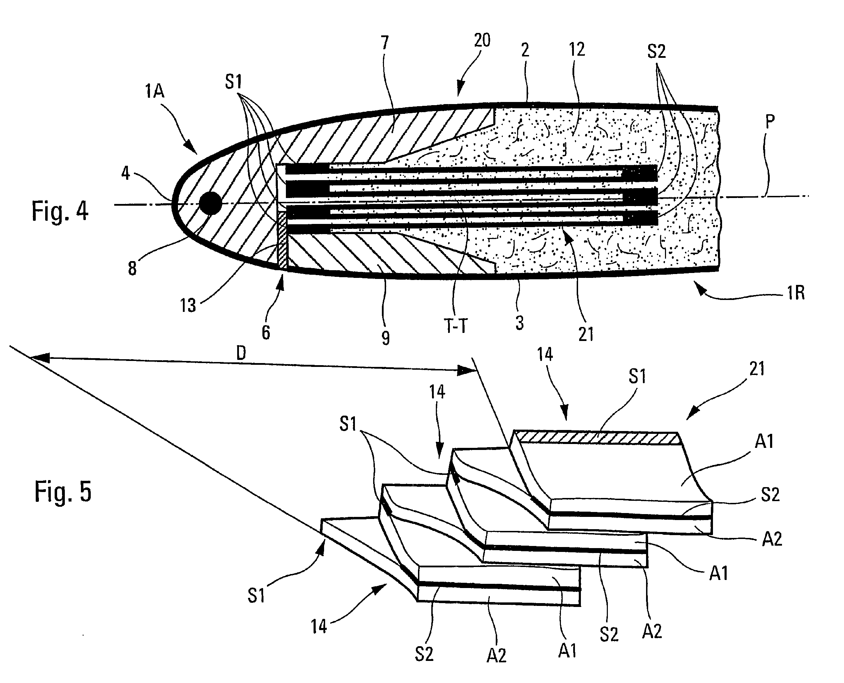

Pour certaines applications, il pourrait se trouver que le déplacement d obtenu par la mise en oeuvre du dispositif actionneur 14 soit insuffisant. Dans ce cas, comme le montrent les figures 4 et 5, la variante de réalisation 20 de l'élément aérodynamique selon la présente invention et conforme en tout autre point à l'élément aérodynamique 1 prévoit de mettre en oeuvre plusieurs dispositifs actionneurs 14 superposés et reliés par les zones S1 d'actionneurs A1 et A2 de dispositifs actionneurs 14 adjacents pour former un dispositif actionneur unique 21 apte à présenter une course de cisaillement plus élevée.

Comme le montre la figure 5, si le dispositif actionneur 21 est composé de trois dispositifs actionneurs 14, sa course de cisaillement D peut être trois fois plus grande que la course de cisaillement d d'un seul des dispositifs actionneurs 14. Le dispositif actionneur 21 étant épais, il ne peut plus se trouver "dans" le plan de corde P ; il est alors disposé parallèlement audit plan de corde P, de part et d'autre de celui-ci et, dans le cas où l'élément aérodynamique 20 est une pale de voilure tournante, sa position est choisie pour que l'axe de torsion T-T se trouve à la distance C/4 du bord d'attaque 4.

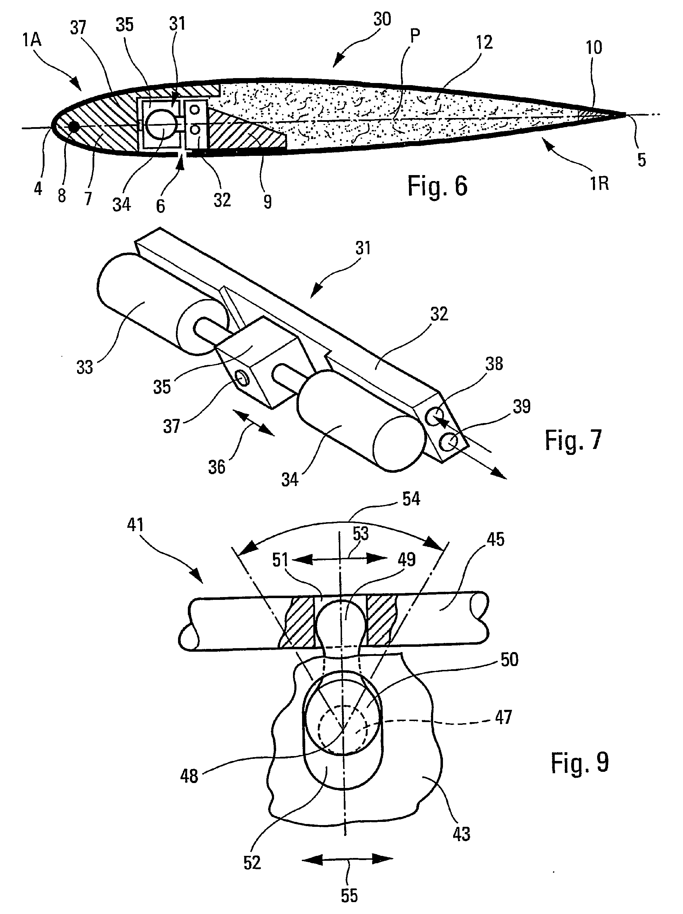

L'élément aérodynamique 30, montré en coupe transversale à son envergure E sur la figure 6, est en tous points semblables aux éléments aérodynamiques 1 et 20 décrits ci-dessus, sauf en ce qui regarde lesdits moyens d'actionnement. En effet, l'élément aérodynamique 30 est pourvu d'une pluralité de dispositifs actionneurs 31 (ou unités), du type hydraulique, répartis le long de son envergure E. Un seul dispositif actionneur 31 est visible sur la section de la figure 6 et la figure 7 illustre schématiquement en perspective la structure d'un tel dispositif actionneur 31. Chaque dispositif actionneur 31 comporte une base 32, supportant deux vérins hydrauliques antagonistes 33 et 34 entre lesquels est disposé un coulisseau 35. On comprendra aisément que le coulisseau 35 peut, sous l'action des vérins 33 et 34, se déplacer en un coulissement rectiligne symbolisé par la double flèche 36.

Chaque dispositif actionneur 31 est disposé à l'intérieur de l'élément aérodynamique 30 de façon que la direction du coulissement à double sens 36 soit parallèle à l'envergure E, la base 32 étant solidaire du longeron d'intrados 9 (et donc de la partie longitudinale arrière 1 R), alors que le coulisseau 35 est solidarisé (en 37) du longeron de bord d'attaque 7 (et donc de la partie longitudinale avant 1 A). Les vérins 33 et 34 peuvent être alimentés en fluide hydraulique par des canalisations 38, 39 traversant lesdites bases 32 et tous les dispositifs actionneurs 31 peuvent être alimentés en parallèle.

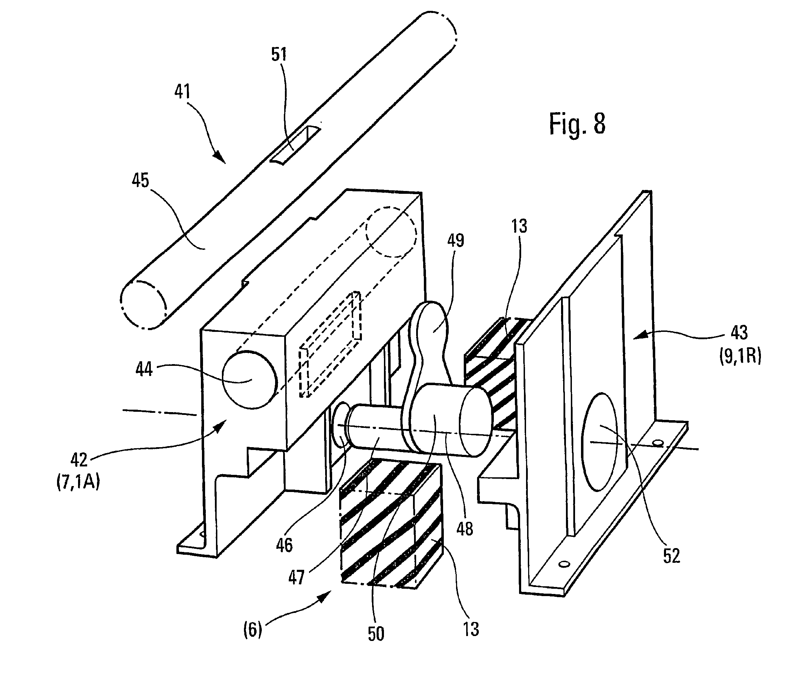

Sur les figures 8 et 9, on a représenté un dispositif actionneur 41, de type mécanique, pouvant être utilisé à la place de chacun des dispositifs hydrauliques 31 des figures 6 et 7.

Chaque dispositif actionneur 41 comporte un bloc avant 42 solidaire du longeron de bord d'attaque 7 (et donc de la partie longitudinale avant 1A) et un bloc arrière 43 solidaire du longeron d'intrados 9 (et donc de la partie longitudinale arrière 1 R).

Le bloc avant 42 est pourvu d'un guidage en coulissement 44 pour une tige 45, parallèle à l'envergure E et à la fente 6, ainsi que d'un palier 46 pour un arbre 47, dont l'axe 48 est orthogonal à la tige 45.

L'arbre 47 porte un maneton 49 et un noyau excentrique 50. Le maneton 49 est en prise avec la tige 45, par exemple par l'intermédiaire d'une fente 51, alors que le noyau excentrique 50 est engagé à frottement doux dans une ouverture oblongue 52, pratiquée dans le bloc arrière 43.

Ainsi, comme l'illustre schématiquement la figure 9, lorsque la tige 45 coulisse dans son guidage 44 (double flèche 53), le maneton 49 bascule autour de l'axe 48 (double flèche 54) en entraînant le noyau excentrique 50, de sorte qu'il en résulte (double flèche 55) un coulissement relatif des blocs 42 et 43 (et donc des longerons 7 et 9 et des parties longitudinales 1 A et 1 R) parallèlement à la tige 45 (et donc à la fente 6).

On remarquera :
- que la pluralité des dispositifs actionneurs (ou unités) 41 répartis le long de l'envergure E de l'élément aérodynamique peuvent être commandés par la même tige 45, elle-même commandée en coulissement par tout moyen approprié ; et
- que, l'amplitude du coulissement 55 relatif entre les blocs 42 et 43 étant fonction de l'excentricité du noyau 50, on peut doter chaque dispositif actionneur 41 d'un noyau excentrique 50 particulier apte à communiquer localement une torsion désirée, éventuellement différente de celle engendrée par les dispositifs actionneurs situés de part et d'autre.

## Revendications

1. Elément aérodynamique allongé, tel qu'une aile d'aéronef ou une pale de voilure tournante, pourvu d'une surface aérodynamique supérieure (2) et d'une surface aérodynamique inférieure (3) délimitant entre elles un bord d'attaque (4) et un bord de fuite (5), ledit élément aérodynamique étant apte à être déformé en torsion autour d'un axe (T-T) dirigé au moins approximativement selon l'envergure (E) dudit élément aérodynamique et comportant, reliées l'une à l'autre, une partie longitudinale avant (1A) comprenant ledit bord d'attaque (4) et une partie longitudinale arrière (1 R) comprenant ledit bord de fuite (5), une torsion dudit élément aérodynamique allant de pair avec un coulissement relatif desdites parties longitudinales (1A, 1 R) au moins sensiblement parallèlement à ladite envergure (E),
**caractérisé en ce que** :
- l'une (2) desdites surfaces aérodynamiques est continue et assure la liaison entre lesdites parties longitudinales avant et arrière (1A, 1R) ;
- l'autre (3) desdites surfaces aérodynamiques est partagée, du côté dudit bord d'attaque (4), par une fente longitudinale (6) dirigée au moins approximativement selon ladite envergure (E) et séparant lesdites parties longitudinales avant et arrière (1A, 1R) l'une de l'autre, l'un des bords (6A, 6R) de ladite fente appartenant à l'une desdites parties longitudinales tandis que l'autre desdits bords appartient à l'autre partie longitudinale ; et
- à l'intérieur dudit élément aérodynamique, sont prévus des moyens d'actionnement (14, 21, 31, 41) aptes à provoquer un coulissement relatif entre lesdits bords (6A, 6R) de la fente (6).

2. Elément aérodynamique selon la revendication 1,
**caractérisé en ce que** ladite surface aérodynamique continue est l'extrados (2) dudit élément aérodynamique, ladite fente longitudinale (6) se trouvant dans l'intrados (3) de ce dernier.

3. Elément aérodynamique selon l'une des revendications 1 ou 2,
**caractérisé en ce que** ladite fente longitudinale (6) est obturée par une bande (13) d'une matière à faible module d'élasticité.

4. Elément aérodynamique selon l'une des revendications 1 à 3,
**caractérisé en ce que** ledit axe de torsion (T-T) est disposé dans le plan de corde (P) dudit élément aérodynamique.

5. Elément aérodynamique selon la revendication 4, constitué par une pale de voilure tournante,
**caractérisé en ce que** ledit axe de torsion (T-T) se trouve, dans le plan de corde (P) de ladite pale, à une distance dudit bord d'attaque (4) égale au moins approximativement au quart de la corde (C) de ladite pale.

6. Elément aérodynamique selon l'une des revendications 1 à 5,
**caractérisé en ce que** lesdits moyens d'actionnement internes sont constitués par un actionneur unique (14, 21) s'étendant le long de l'envergure (E) dudit élément.

7. Elément aérodynamique selon l'une des revendications 1 à 5,
**caractérisé en ce que** lesdits moyens d'actionnement internes sont constitués par plusieurs actionneurs individuels (31, 41) répartis le long de l'envergure (E) dudit élément.

8. Elément aérodynamique selon l'une des revendications 1 à 7,
**caractérisé en ce que** lesdits moyens d'actionnement internes (14, 21) sont de type piézoélectrique, à structure multicouche apte à se déformer en cisaillement plan.

9. Elément aérodynamique selon la revendication 8,
**caractérisé en ce que** lesdits moyens d'actionnement piézoélectriques sont au moins en partie disposés dans le plan de corde (P) dudit élément aérodynamique.

10. Elément aérodynamique selon la revendication 7,
**caractérisé en ce que** lesdits moyens d'actionnement internes comportent une pluralité d'actionneurs individuels (31) de type hydraulique, chaque actionneur individuel (31) comportant au moins un vérin (33, 34) solidaire d'une desdites parties longitudinales (1A, 1R) et apte à déplacer un coulisseau (35) solidaire de l'autre partie longitudinale (1A, 1R) parallèlement à l'envergure (E) dudit élément aérodynamique.

11. Elément aérodynamique selon la revendication 7,
**caractérisé en ce que** lesdits moyens d'actionnement internes comportent une pluralité d'actionneurs individuels (41) de type mécanique, chaque actionneur individuel (41) comportant un excentrique (50) monté rotatif par rapport à l'une des parties longitudinales (1A, 1R) et coopérant avec l'autre partie longitudinale pour engendrer le coulissement relatif (55) entre lesdites parties longitudinales.

12. Elément aérodynamique selon la revendication 11,
**caractérisé en ce que** ledit excentrique (50) est commandé par une tringle (45) guidée en coulissement dans ladite partie longitudinale (1A) sur laquelle ledit excentrique (50) est monté rotatif.

## Claims

1. An elongated aerodynamic element, such as an aircraft wring or a rotary wring blade, provided with an upper aerodynamic surface (2) and a lower aerodynamic surface (3) defining therebetween a leading edge (4) and a trailing edge (5), said aerodynamic element being capable of being torsion-deformed along an axis (T-T) directed at least approximatively along the span (E) of said aerodynamic element and including, connected to each other, a front longitudinal portion (1A) including said leading edge (4) and a rear longitudinal portion (1R) including said trailing edge (5), with a torsion of said aerodynamic element being associated with a relative sliding of said longitudinal portions (1A, 1R) at least substantially in parallel to said span (E), **characterised in that**:
- one (2) of said aerodynamic surfaces is continuous and provides a linking between said front and rear longitudinal portions (1A, 1R);
- the other (3) of said aerodynamic surfaces is partitioned, on the side of said leading edge (4), by a longitudinal slot (6) directed at least approximately along said span (E) and separating said front and rear longitudinal portions (1A, 1R) from each other, with one of the edges (6A, 6R) of said slot being part of one of said longitudinal portions whereas the other of said edges is part of the other longitudinal portion; and
- inside said aerodynamic element, are provided actuating means (14, 21, 31, 41) capable of causing a relative sliding between said edges (6A, 6R) of the slot (6).

2. The aerodynamic element according to claim 1, **characterised in that** said continuous aerodynamic surface is the upper surface (2) of said aerodynamic element, said longitudinal slot (6) being within the lower surface (3) thereof.

3. The aerodynamic element according to any of claims 1 or 2, **characterised in that** said longitudinal slot (6) is sealed by a tape (13) of a low elasticity modulus material.

4. The aerodynamic element according to any of claims 1 to 3, **characterised in that** said torsion axis (T-T) is provided in the chord plane (T) of said aerodynamic element.

5. The aerodynamic element according to claim 4, being a rotary wing blade, **characterised in that** said torsion axis (T-T) is, in the chord plane (P) of said blade, at a distance from said leading edge (4) of at least approximatively one fourth of the chord (C) of said blade.

6. The aerodynamic element according to any of claims 1 to 5, **characterised in that** said inner actuating means are made of a single actuator (14, 21 extended along the span (E) of said element.

7. The aerodynamic element according to any of claims 1 to 5, **characterised in that** said inner actuating means are made of several individual actuators (31, 41) distributed along the span (E) of said element.

8. The aerodynamic element according to any of claims 1 to 7, **characterised in that** said inner actuating means (14, 21) are of the piezoelectric type, with a multilayer structure capable of a planar shear deformation.

9. The aerodynamic element according to claim 8, **characterised in that** said piezoelectric actuating means are at least partly provided in the chord plane (P) of said aerodynamic element.

10. The aerodynamic element according to claim 7, **characterised in that** said inner actuating means include a plurality of individual actuators (31) of the hydraulic type, each individual actuator (31) including at least one jack (33, 34) integral with one of said longitudinal portions (1A, 1R) and capable of moving a slider (35) integral with the other longitudinal portion (1A, 1R) in parallel to the span (E) of said aerodynamic element.

11. The aerodynamic element according to claim 7, **characterised in that** said inner actuating means include a plurality of individual actuators (41) of the mechanical type, each individual actuator (41) including an eccentric (50) rotatably mounted relatively to one of the longitudinal portions (1A, 1R) and cooperating with the other longitudinal portion in order to generate the relative sliding (55) between said longitudinal portions.

12. The aerodynamic element according to claim 11, **characterised in that** said eccentric (50) is controlled by a control rod (45) slidingly guided in said longitudinal portion (1A) on which said eccentric (50) is rotatably mounted.

## Patentansprüche

1. Langgezogenes aerodynamisches Element, wie ein Luftfahrzeugflügel oder ein Rotorblatt, versehen mit einer oberen aerodynamischen Fläche (2) und einer unteren aerodynamischen Fläche (3), die zwischen sich eine Vorderkante (4) und eine Hinterkante (5) begrenzen, wobei das aerodynamische Element dafür geeignet ist, um eine Achse (T-T), die zumindest annähernd gemäß der Spannweite (E) des aerodynamischen Elements ausgerichtet ist, tordiert zu werden und, miteinander verbunden, einen vorderen längsgerichteten Teil (1A), der die Vorderkante (4) umfasst, und einen hinteren längsgerichteten Teil (1 R), der die Hinterkante (5) umfasst, aufweist, wobei eine Torsion des aerodynamischen Elements mit einer relativen Verschiebung der längsgerichteten Teile (1A, 1 R) im Wesentlichen parallel zu der Spannweite (E) einhergeht,
**dadurch gekennzeichnet, dass**
- eine (2) der aerodynamischen Flächen durchgängig ist und die Verbindung zwischen dem vorderen und dem hinteren längsgerichteten Teil (1A, 1 R) sicherstellt;
- die andere (3) der aerodynamischen Flächen, auf der Seite der Vorderkante (4), durch einen längsgerichteten Schlitz (6) geteilt ist, der zumindest annähernd gemäß der Spannweite (E) ausgerichtet ist und das vordere und das hintere längsgerichtete Teil (1A, 1 R) voneinander trennt, wobei einer der Ränder (6A, 6R) des Schlitzes einem der längsgerichteten Teile zugehörig ist, während der andere der Ränder dem anderen längsgerichteten Teil zugehörig ist; und
- im Innern des aerodynamischen Elements Betätigungsmittel (14, 21, 31, 41) vorgesehen sind, um eine relative Verschiebung zwischen den Rändern (6A, 6R) des Schlitzes (6) zu bewirken.

2. Aerodynamisches Element nach Anspruch 1, **dadurch gekennzeichnet, dass** die durchgängige aerodynamische Fläche die Oberseite (2) des aerodynamischen Elements ist, wobei der längsgerichtete Schlitz (6) sich in der Unterseite (3) dieses Letzten befindet.

3. Aerodynamisches Element nach einem der Ansprüche 1 oder 2, **dadurch gekennzeichnet, dass** der längsgerichtete Schlitz (6) durch einen Streifen (13) aus einem Material mit geringem Elastizitätsmodul verschlossen ist.

4. Aerodynamisches Element nach einem der Ansprüche 1 bis 3, **dadurch gekennzeichnet, dass** die Torsionsachse (T-T) in der Sehnenebene (P) des aerodynamischen Elements angeordnet ist.

5. Aerodynamisches Element nach Anspruch 4, gebildet von einem Rotorblatt, **dadurch gekennzeichnet, dass** die Torsionsachse (T-T) sich, in der Sehnenebene (P) des Blattes, in einem Abstand von der Vorderkante (4) befindet, der zumindest annähernd gleich dem Viertel der Sehne (C) des Blattes ist.

6. Aerodynamisches Element nach einem der Ansprüche 1 bis 5, **dadurch gekennzeichnet, dass** die inneren Antriebsmittel von einem einzigen Antrieb (14, 21) gebildet sind, der sich entlang der Spannweite (E) des Elements erstreckt.

7. Aerodynamisches Element nach einem der Ansprüche 1 bis 5, **dadurch gekennzeichnet, dass** die inneren Antriebsmittel von mehreren einzelnen Antrieben (31, 41) gebildet sind, die entlang der Spannweite (E) des Elements verteilt sind.

8. Aerodynamisches Element nach einem der Ansprüche 1 bis 7, **dadurch gekennzeichnet, dass** die inneren Antriebsmittel (14, 21) vom piezoelektrischen Typ sind, mit einer mehrschichtigen Struktur, die beim Planscheren verformbar ist.

9. Aerodynamisches Element nach Anspruch 8, **dadurch gekennzeichnet, dass** die piezoelektrischen Antriebsmittel zumindest zum Teil in der Sehnenebene (P) des aerodynamischen Elements angeordnet sind.

10. Aerodynamisches Element nach Anspruch 7, **dadurch gekennzeichnet, dass** die inneren Antriebsmittel eine Vielzahl von einzelnen Antriebsmitteln (31) vom hydraulischen Typ aufweisen, wobei jedes einzelne Antriebsmittel (31) mindestens einen Zylinder (33, 34) aufweist, der fest mit einem der längsgerichteten Teile (1A, 1 R) verbunden ist und dafür geeignet ist, einen Schieber (35), der mit dem anderen längsgerichteten Teil (1A, 1 R) fest verbunden ist, parallel zu der Spannweite (E) des aerodynamischen Elements zu verschieben.

11. Aerodynamisches Element nach Anspruch 7, **dadurch gekennzeichnet, dass** die inneren Antriebsmittel eine Vielzahl von einzelnen Antriebsmitteln (41) vom mechanischen Typ aufweisen, wobei jedes einzelne Antriebsmittel (41) einen Exzenter (50) aufweist, der relativ zu einem der längsgerichteten Teile (1A, 1 R) drehbeweglich gelagert ist und mit dem anderen längsgerichteten Teil zusammenwirkt, um die relative Verschiebung (55) zwischen den längsgerichteten Teilen zu bewirken.

12. Aerodynamisches Element nach Anspruch 11, **dadurch gekennzeichnet, dass** der Exzenter (50) von einer Treibstange (45) betätigt wird, die in ihrer Verschiebung in dem längsgerichteten Teil (1A), an dem der Exzenter (50) drehbeweglich gelagert ist, geführt wird.
